(19) Europäisches Patentamt
European Patent Office
Office européen des brevets

(11) Veröffentlichungsnummer: **0 158 238**
**B1**

(12) **EUROPÄISCHE PATENTSCHRIFT**

(45) Veröffentlichungstag der Patentschrift: **27.09.89**

(51) Int. Cl.⁴: **C 08 L 67/06**, C 08 K 5/34

(21) Anmeldenummer: **85103770.5**

(22) Anmeldetag: **28.03.85**

(54) **Ungesättigte Polyesterharze.**

(30) Priorität: **13.04.84 DE 3413939**

(43) Veröffentlichungstag der Anmeldung: **16.10.85 Patentblatt 85/42**

(45) Bekanntmachung des Hinweises auf die Patenterteilung: **27.09.89 Patentblatt 89/39**

(84) Benannte Vertragsstaaten: **BE DE FR GB IT NL**

(56) Entgegenhaltungen:
**DE-A-1 594 887**
**GB-A-1 406 545**
**US-A-3 824 201**
**US-A-4 260 538**

(73) Patentinhaber: **BASF Aktiengesellschaft, Carl-Bosch-Strasse 38, D-6700 Ludwigshafen (DE)**

(72) Erfinder: **Gramlich, Walter, Albertine-Scherer-Strasse, D-6701 Birkenheide (DE)**
Erfinder: **Guthmann, Alfred, Dr., Duerkheimer Strasse 33, D-6520 Worms 1 (DE)**
Erfinder: **Koenig, Ulrich, Dr., Londoner Ring 83, D-6700 Ludwigshafen (DE)**

**EP 0 158 238 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ungesättigte Polyesterharze, die das Dimerisierungsprodukt von Toluol-2,4-diisocyanat dispergiert enthalten.

Als Thixotropiermittel für ungesättigte Polyesterharze wird gewöhnlich pyrogene Kieselsäure eingesetzt. Derartige Systeme neigen jedoch wegen der großen Dichteunterschiede zwischen Harz und Thixotropiermittel zur Sedimentation. Zudem gelingt die Einarbeitung von pyrogener Kieselsäure in Reaktionsharze nur mit Hilfe von Intensivmischern, weil nur dann die notwendige Feindispergierung erreicht wird.

Der vorliegenden Erfindung lag nun die Aufgabe zugrunde, ein besseres Thixotropiermittel für ungesättigte Polyesterharze bereitzustellen.

Es wurde gefunden, daß durch Zusatz des Dimerisierungsprodukts von Toluol-2,4-diisocyanat in Mengen zwischen 0,1 und 1,5 Gew.% zu ungesättigten Polyesterharzen diese Aufgabe gelöst wird.

Die anspruchsgemäßen Polyesterharze enthalten folgende Bestandteile:

A. Als ethylenisch ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclischen Gruppen, cyclische Gruppen als auch beide Arten von Gruppen aufweisenden Alkandiole und Oxalkandiole, wie z. B. Ethandiol-1,2, Propandiol-1,2, Propandiol-1,3, Butandiol-1,3, Butandiol-1,4, Hexandiol-1,6, 2,2′-Dimethylpropandiol-1,3, Diethylenglykol, Triethylenglykol, Polyethylenglykol, Dipropylenglykol, Cyclohexandiol-1,2, 2,2′-Bis-(hydroxycyclohexyl)-propan, Trimethylolpropanmonoallylether oder Neopentylglykol. Ferner können ein-, drei- oder höherwertige Alkohole, wie z. B. Ethylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäure bzw. deren Derivate sind zweibasische olefinisch ungesättigte, vorzugsweise $\alpha,\beta$-olefinisch ungesättigte Carbonsäuren, wie z. B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z. B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure oder Hexachlorendomethylentetrahydrophthalsäure einkondensiert sein, ferner ein-, drei- und höherbasische Carbonsäuren, wie z. B. Ethylhexansäure, Fettsäuren, Methacrylsäure, Acrylsäure, Fettsäuren, 1,2,4,5-Benzoltetracarbonsäure.

Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemischte ungesättigte Polyester, darunter auch solche, die in den Vinylmonomeren B nur beschränkt löslich sind und leicht kristallisieren, können ebenfalls vorteilhaft eingesetzt werden. Solche leicht kristallisierende ungesättigte Polyester können z. B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen Säurezahlen von 5 bis 200 mg KOH pro g, vorzugsweise von 20 bis 85 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

In Frage kommen ferner Vinylesterharze. Geeignete endständige ungesättigte Vinylesterharze besitzen die charakteristische Gruppierung $-CO-OCH_2CHOH-CH_2O-$ und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Vinylesterharze der genannten Art werden z. B. beschrieben in der US-PS 3 367 992, wonach Dicarbonsäure-Halbester von Hydroxyacrylaten oder -methacrylaten mit Polyepoxidharzen umgesetzt werden. Gemäß US-PS 3 066 112 und 3 179 623 werden Vinylesterharze aus Monocarbonsäuren, z. B. Acryl- und Methacrylsäure, erhalten; hier wird auch eine alternative Herstellungsmethode genannt, wonach ein Glycidylmethacrylat oder -acrylat mit dem Natriumsalz eines zweiwertigen Phenols, z. B. Bisphenol A, zur Reaktion gebracht wird. Vinylesterharze auf Basis von Epoxid-Novolac-Harzen sind in der US-PS 3 301 743 beschrieben. In der US-PS 3 256 226 werden Vinylesterharze offenbart, bei denen das Molekulargewicht des Polyepoxids vor der Reaktion mit der Acrylsäure durch Umsetzung von 2 Mol Polyepoxid mit 1 Mol einer Dicarbonsäure gesteigert wird. In Betracht kommen ferner modifizierte Vinylesterharze, beispielsweise solche gemäß DE-OS 2 534 039 (äquivalent zu US-PS 3 947 422) die Halbestergruppen enthalten und durch Reaktion der zweiten Hydroxylgruppe der Gruppierung $-CO-OCH \cdot CHOH-CH_2O-$ mit einem Dicarbonsäureanhydrid, z. B. dem Anhydrid der Maleinsäure, Citraconsäure, Phthalsäure, Tetrabromphthalsäure u. a. erhalten werden. Die Vinylesterharze enthalten im allgemeinen keine Säuregruppen, ihre OH-Zahlen betragen vorzugsweise 50 bis 120 mg KOH pro g.

B. Als copolymerisierbare, ethylenisch ungesättigte monomere Verbindungen kommen die üblicherweise zum Herstellen ungesättigter Polyesterharze verwendeten Allyl- und vorzugsweise Vinylverbindung in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen im allgemeinen in einer Menge von bis zu 80, vorzugsweise von 1 bis 70 Gew.-%, bezogen auf das Gesamtgewicht der Komponenten A + B enthalten.

C. Formmassen auf Basis der erfindungsgemäßen ungesättigten Polyesterharze können gegebenenfalls Verstärkungsfasern und Füllstoffe enthalten.

Als Verstärkungsfasern kommen in Frage anorganische oder organische Fasern als Rovings oder flächige, gegebenenfalls daraus gewebte Gebilde, wie Matten, z. B. aus Glas, Kohlenstoff, Asbest, Cellulose und synthetischen organischen Fasern, wie Polycarbonsäureester, Polycarbonate und Polyamide.

Geeignete Füllstoffe sind z. B. übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen.

Verstärkungsfasern und Füllstoffe werden in Mengen von 5 bis 400, vorzugsweise 10 bis 250 Gew.-%, bezogen auf die Komponenten A + B, verwendet.

D. Als Polymerisationsinitiatoren werden übliche, bei Raumtemperatur oder in der Wärme Radikale bildende organische Peroxide in Mengen von 0,1 bis 3 Gew.-%, bezogen auf A + B, eingesetzt. Geeignete Initiatoren sind z. B.: Methylethylketonperoxid, Acetylacetonperoxid, Cyclohexanonperoxid, Benzoylperoxid, tert.-Butylperoctoat, tert.-Butylperbenzoat, Dicumylperoxid, Di-tert.-Dibutyl-peroxid und Perketale, wie z. B. Trimethylcyclohexanonperketal, sowie Percarbonate. Hydroperoxide sind nicht geeinget. Vorzugsweise sollen die Peroxide eine Halbwertszeit bei 80 °C von mehr als 5 h, insbesondere von mehr als 50 h haben. Reaktive Peroxide, z. B. tert.-Butylperoctoat können zusätzlich in untergeordneten Mengen anwesend sein. Auch CC-labile Verbindungen sowie Azoverbindungen sind geeignet.

E. Das Dimerisierungsprodukt von Toluol-2,4-diisocyanat hat folgende Formel

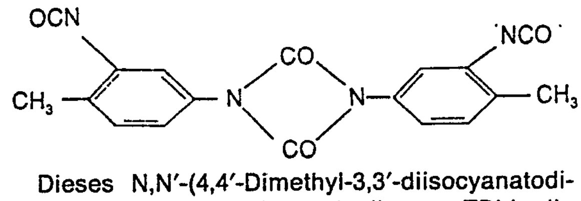

Dieses N,N'-(4,4'-Dimethyl-3,3'-diisocyanatodiphenyl-uretdion (TDID) hat als dimeres TDI in die Technik Eingang gefunden. Es wird z. B. unter dem Namen ®Desmodur TT vertrieben und hat folgende Eigenschaften: Es ist ein kristallines, staubfeines Pulver. Die einzelnen Partikel haben unregelmäßig eckige Gestalt. Die Größe der Teilchen liegt etwa zwischen 1 und 20 µm. Die Dichte bei 20 °C ist 1,46 g/cm³. Der Schmelzpunkt des reinen TDID ist 156 °C.

In nicht reaktiven organischen Flüssigkeiten löst sich TDID bei Zimmertemperatur praktisch nicht. Mit aliphatischen Hydroxylgruppen reagieren die freien Isocyanatgruppen zu Urethangruppen, insbesondere bei erhöhten Temperaturen. Oberhalb von 130 °C zerfällt TDID unter Entstehen zweier weiterer freier Isocyanatgruppen; d. h. das Uretdion zerfällt in die Ausgangsgruppierungen. In Gegenwart stark basischer Katalysatoren tritt der Zerfall bei niedrigerer Temperatur ein.

TDID bildet sich aus dem Isocyanat durch Einwirkung von Katalysatoren wie z. B. von Pyridin und von Trialkylphosphinen und Dialkylarylphosphinen. Diese Katalysatoren sind auch als Stabilisatoren für den Uretdion-Ring, in TDID enthaltenen Dispersionen, geeignet. Solche Stabilisatoren sind zweckmäßig, wenn die Dispersionen kurzfristig Temperaturen oberhalb 130 °C ausgesetzt werden. Stabilisator-Konzentrationen von ca. 0,001 bis 0,05% sind im allgemeinen ausreichend.

Die Reaktionsfähigkeit der Isocyanat-Gruppen gegenüber Hydroxylgruppen wird durch Lewis-Säuren inhibiert, z. B. durch Benzoylchlorid und Cholinchlorid in Konzentrationen von ca. 0,01 bis 0,5%. Dadurch wird die Lagerstabilität von TDID-Reaktionsharz-Dispersionen erhöht.

F. Als weitere übliche Zusatzstoffe kommen in Frage: Inhibitoren, wie Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01

bis 0,1 Gew.-%, bezogen auf die Komponenten A + B, enthalten.

Geeignete Härtungsbeschleuniger sind z. B. Oktoate oder Naphthenate von Kupfer, Blei, Calcium, Magnesium, Cer und insbesondere von Mangan und Cobalt; ferner aromatische Amine, wie Dimethylanilin oder Diethylanilin.

Ein bevorzugtes Verfahren zur Herstellung der erfindungsgemäßen Formmassen besteht darin, daß man zunächst eine Lösung aus dem ungesättigten Polyester A in den Monomeren B herstellt, die außerdem das Peroxid D und gegebenenfalls die weiteren Zusatzstoffe G enthält.

In diese Lösung wird das pulverförmige Uretdion-diisocyanat eingerührt. Zur schnelleren Vermischung ist es zweckmäßig, das TDID vorher mit Styrol oder einem Weichmacher, z. B. Dioctylphthalat, anzurühren.

Bei Konzentrationen von 0,1 bis 1,5% TDID zeigen die Dispersionen ein thixotropes Verhalten, d. h. bei Anwendung einer Schubspannung erhöht sich zeitabhängig die Fließfähigkeit. Umgekehrt verringert sich die Fließfähigkeit der Dispersionen in Ruhe zeitabhängig. Ungesättigte Polyesterharze und insbesondere Vinylesterharze, die mit reinem TDID nur eine geringe Neigung zur Thixotropie zeigen, werden deutlich thixotroper durch Zusatz von Wasser in Mengen von 0,1 bis 1 Gew.-%, bezogen auf das Harz.

Die im Beispiel genannten Teile und Prozente beziehen sich auf das Gewicht.

Beispiel (Thixotropieverhalten)

Ein ungesättigter Polyester mit Säurezahl 22 mg KOH pro g wurde hergestellt durch Umsetzung von Maleinsäure, Phthalsäure und Propandiol-1,2 im Molverhältnis 1 : 0,25 : 1,25. Er wurde 67%ig in Styrol gelöst und mit 100 ppm Hydrochinon stabilisiert.

89 Teile dieses Polyesters wurden mit 0,0003 Teilen Kupfernaphthenat versetzt und es wurden 0,33 Teile TDID, angerieben in 11 Teilen Styrol, eingerührt.

Die Messung des Thixotropieverhaltens erfolgte mit einem Brookfield-Viskosimeter RTV unter Verwendung der Spindel 2. Durch Prüfung der Viskosität bei Rühren mit 0,5 bzw. 10 Umdrehungen pro Minute wurden Werte ermittelt, welche das Thixotropieverhalten beschreiben.

Bei 0,5 U/min. wurde der Fließwiderstandswert nach 3 min, bei 10 U/min nach 1 min Prüfdauer abgelesen. Durch kurzes Aufrühren der Proben vor der Messung wurde gewährleistet, daß alle Proben unter gleichen Vorbedingungen geprüft wurden. 30 min und 24 h nach dem Aufrühren wurde die Probe erneut gemessen. Das Aufrühren erfolgte unter konstanten Bedingungen mit einem Pendraulik-Technikumdissolver, Typ TD, Rührscheibe 1, mit einer Rührgeschwindigkeit von 1800 U/min. Die Rührzeit betrug 1 min.

Ergebnis:

| Rührgeschwindigkeit U/min | Fließwiderstand [mPa · s] |
|---|---|
| 0,5 | 4800 |
| 10,0 | 880 |

Nach einer Lagerzeit von 4 Wochen wurde bei gleicher Behandlung gleiches Fließverhalten festgestellt.

**Patentanspruch**

Ungesättigte Polyesterharze mit verbesserten thixotropen Eigenschaften, gekennzeichnet durch einen Gehalt von 0,1 bis 1,5 Gew.-%, bezogen auf das Harz, an dem Dimerisierungsprodukt von Toluol-2,4-diisocyanat, welches als Feststoff in dem Harz dispergiert ist.

**Claim**

An unsaturated polyester resin having improved thixotropic properties which contains from 0.1 to 1.5% by weight, based on the resin, of the dimerization product of toluene 2,4-diisocyanate, which is dispersed as a solid in the resin.

**Revendication**

Résines de polyesters non saturées avec des propriétés thixotropes améliorées, caractérisées par une teneur de 0,1 à 1,5% du poids de la résine en produit de dimérisation du diisocyanate-2,4 de toluène, dispersé comme matière solide dans la résine.